# EUROPEAN PATENT SPECIFICATION

(11) **EP 3 557 909 B1**
(45) Date of publication and mention of the grant of the patent: **19.08.2020**
(21) Application number: 18167495.3
(22) Date of filing: 16.04.2018
(51) Int. Cl.: H04W 36/00, H04W 36/32

(54) **GPS SUPPORTED HANDOVER TECHNIQUES FOR UNMANNED AERIAL VEHICLES**
GPS-UNTERSTÜTZTE ÜBERGABETECHNIKEN FÜR UNBEMANNTE LUFTFAHRZEUGE
TECHNIQUES DE TRANSFERT PRISES EN CHARGE PAR GPS POUR VÉHICULES AÉRIENS SANS PILOTE

(43) Date of publication of application: 23.10.2019
(73) Proprietor: Deutsche Telekom AG, 53113 Bonn (DE)
(72) Inventor: FRISCH, Andreas, 53757 Sankt Augustin (DE); SCHEPP, Ralph, 53343 Wachtberg (DE)
(74) Representative: Nern, Peter-Michael

(56) References cited:
- EP-A1- 2 629 568
- US-B1- 9 467 922
- US-B1- 9 537 561

## Description

### TECHNICAL FIELD

The present disclosure relates to GPS (Global Positioning System) supported handover techniques for unmanned aerial vehicles. The disclosure particularly relates to a mobile terminal, in particular an Unmanned Aerial Vehicle (UAV) such as a drone, a serving cell, in particular a base station of a cellular network connecting the mobile terminal and a network entity of the cellular network for controlling the handover of the mobile terminal. At ground level, the mobile terminal has a relation to surrounding base stations, particularly due to shadowing effects, while at specific heights above the ground further base stations beyond the surrounding area are visible to which the mobile terminal creates a line-of-sight relation. The disclosure further relates to a method for scheduling the handover of the mobile terminal. In particular, the disclosure relates to GPS supported SON (Self-Organizing Networks) optimization with special consideration of fast moving mobile terminals in the lower airspace.

### BACKGROUND

Current Mobile Networks are designed and optimized for terrestrial traffic. To support handover for mobile terminals between cells specific procedures and logics are introduced in mobile communication networks relying on Self Organized Networks (SON). These mechanisms work fine for current traffic patterns, i.e. terrestric mobile terminals. With new applications, in particular Unmanned Aerial Vehicles (UAVs) and other mobile terminals used in the lower airspace, new challenges emerge since the behavior of terminals looks different and needs special treatment.

US9537561 and EP2629568 disclose background information that are useful to understand the context of the invention, as defined in the appended claims.

### SUMMARY

It is the object of the invention to provide a concept for improving handover of mobile terminals, in particular UAVs, moving in the lower airspace.

This object is achieved by the features of the independent claims. Further implementation forms are apparent from the dependent claims, the description and the figures.

A basic concept of the invention is to use GPS information or generally GNSS information as additional indicator for handover relations. Adjacent cells / handover is defined in a more appropriate way to handle the observed connectivity pattern of mobile terminals in the lower airspace. Those cells are determined which are entitled to serve the UAV in a certain area. To indicate the current position of the UAV the GPS coordinates of the UAV are recognized and provided to the network as additional indicator. Since the serving cell can be many kilometers away the information from the network in such conditions is not sufficient to define the position of the mobile terminal (in this case the UAV) based on the current serving cell, but another indicator is necessary to provide good information and determine the next best serving cell once handover shall be done to another cell without running into issues as described above.

For this reasons the GPS (or generally the GNSS) coordinates are introduced additionally as further information to guide the handover-mechanism in these specific circumstances. Based on the information about the geographical position by the GPS coordinates the network gets the opportunity to define those cells in the environment which are entitled to pick up the connection once the signal from current serving cell becomes weak. From network perspective this selection of cells becomes the adjacent cells for this class of terminals. In effect the number of adjacent cells in this specific context is limited once again and fits in current design for handover support.

Based on this information handover will not be enabled to all possible cells but only to a limited number of cells which are defined in advance. Those cells are entitled to take over a mobile terminal from a specific position once a handover between the cell currently serving the mobile terminal and another cell with a stronger signal shall take place.

The concept described in this disclosure is particularly focused on UAVs and their effects as mobile terminals in the lower airspace since this was the starting point of the consideration and motivation of the disclosure. However, the concept itself is more general and is not limited to UAVs but can be applied to all situations of mobile terminals which shall be forced to specific cells based on geographical information.

In order to describe the invention in detail, the following terms, abbreviations and notations will be used:
- UAV:: unmanned aerial vehicle or drone
- UAS:: unmanned aerial system
- GNSS:: Global Navigation Satellite System
- GPS:: Global Positioning System
- 5G:: fifth generation mobile network
- LTE:: Long Term Evolution
- BS:: Base Station, eNodeB
- RF:: radio frequency
- RSS:: received signal strength
- SIM:: Subscriber Identity Module
- MSISDN:: Mobile Suscriber Integrated Services Digital Number
- HSS:: Home Subscriber Server
- MME:: Mobile Mobility Entity or Mobility Management Entity
- IMSI:: International Mobile Subscriber Identity

In the following, unmanned aerial vehicles (UAVs) and drones are described. A UAV, commonly known as a drone, unmanned aircraft system (UAS), or by several other names, is an aircraft without a human pilot aboard. A UAV is defined as a powered, aerial vehicle that does not carry a human operator, uses aerodynamic forces to provide vehicle lift, can fly autonomously or be piloted remotely, can be expendable or recoverable, and can carry a lethal or nonlethal payload. The flight of UAVs may operate with various degrees of vehicular automation: either under remote control by a human operator, or fully or intermittently autonomously, by onboard computers.

UAVs as described in the following may be equipped with global navigation satellite system (GNSS) receivers (e.g. GPS, GLONASS, Galileo) to determine their location to high precision (within a few meters) using time signal transmitted along a line-of-sight propagation by radio from satellites to provide autonomous geo-spatial positioning. The GNSS receivers can be used for providing position, navigation or for tracking the position. Additionally the received signals allow the electronic receiver to calculate the current local time to high precision, which allows time synchronisation.

According to a first aspect, the invention relates to a mobile terminal, in particular an unmanned aerial vehicle (UAV), comprising: a global navigation satellite system (GNSS) receiver configured to receive information about a geographical position of the mobile terminal; and a radio transceiver configured to transmit the geographical position of the mobile terminal to a serving cell of a cellular network which connects the mobile terminal to the cellular network, and receive information about specific serving cells of the cellular network which are entitled to pick up the connection from the serving cell once a handover criterion is fulfilled, wherein the specific serving cells depend on the geographical position of the mobile terminal.

Using such a procedure improves handover, in particular for UAVs moving in the lower airspace. The mobile terminal uses GNSS information as additional indicator for handover relations. Hence, handover can be defined in a more appropriate way to handle the observed connectivity pattern of mobile terminals in the lower airspace. Those cells are determined which are entitled to serve the UAV in a certain area. The GNSS / GPS coordinates of the UAV are recognized and provided to the network as additional indicator. Since the serving cell can be many kilometers away, the GNSS / GPS coordinates serve as another indicator to provide good information and determine the next best serving cell once handover shall be done to another cell.

In an exemplary implementation form of the mobile terminal, at least one of the specific serving cells is located non-contiguously to the serving cell.

This provides the advantage that handover is not limited to the cells contiguously to the serving cell since other cells non-contigously to the serving cell may have higher signal strength.

In an exemplary implementation form of the mobile terminal, at least a portion of the specific serving cells are located on a ring of cells which are non-neighboring to the serving cell.

This provides the advantage that handover is extended to a larger area of cells that may be in line-of-sight with the mobile terminal when the mobile terminal moves in the lower airspace. When a UAV is moving fast, the handover rate can be limited and thus quality of service can be improved when such ring of non-neighboring cells is used.

In an exemplary implementation form of the mobile terminal, the information about the specific serving cells depends on a topography and/or traffic patterns of a region surrounding the serving cell.

This provides the advantage that in urban areas or in high-traffic density areas the specific serving cells may include more cells than in non-urban or lower traffic areas. Handover can be more efficiently scheduled.

At ground level, the mobile terminal has a relation to surrounding base stations, particularly due to shadowing effects, while at specific heights above the ground further base stations beyond the surrounding area are visible to which the mobile terminal creates a line-of-sight relation.

In an exemplary implementation form of the mobile terminal, the information about the specific serving cells depend on the number of cells to which the mobile terminal has a line-of-sight relation.

This provides the advantage that for a high number of cells in line-of-sight relation a better selection can be performed than for a lower number of cells in line-of-sight relation where all or nearly all cells are selected as specific serving cells.

In an exemplary implementation form of the mobile terminal, the information about the specific serving cells depends on an altitude of the mobile terminal.

This provides the advantage that the altitude is a good indication for the number of available cells that can be used as specific serving cells. At ground level neighboring cells can be used for handover while at higher levels from ground, more and more cells have a line-of-sight relation with the mobile terminal and have high enough received signal strength to be used for handover.

In an exemplary implementation form the mobile terminal comprises a processor configured to perform a handover to one of the specific serving cells once the handover criterion is fulfilled and if an altitude of the mobile terminal is above a threshold, in particular a threshold indicating entering a lower airspace.

This provides the advantage that the mobile terminal can be flexibly adjusted to apply free handover (using one of the contiguously located cells as new serving cell) and to apply designated handover (using one of the specific servering cells as new serving cell). The altitude is a good indicator to detect if the mobile terminal operates at ground level or at the lower airspace.

In an exemplary implementation form the mobile terminal comprises a subscription module, in particular a SIM or eSIM module, configured to store an identity of the mobile terminal, in particular an International Mobile Subscriber Identity, IMSI, wherein the information about the specific serving cells depends on the identity of the mobile terminal.

This provides the advantage that designated handover (using one of the specific servering cells as new serving cell) as described in this disclosure can be applied to specific mobile terminals, e.g. UAVs or drones, but not applied to common mobile phones or smartphones operating on terrestrial level. These specific mobile terminals can be detected by their SIM module, e.g. their IMSI.

In an exemplary implementation form the mobile terminal comprises a monitoring module, configured to monitor Key Performance Indicators, KPIs, in particular signal strength and/or signal quality of cells of the cellular network which are different from the serving cell, and to transmit the monitored KPIs via the serving cell to the cellular network.

This provides the advantage that the mobile terminal can monitor those cells that are most suitable to become specific serving cells to be used for handover and report the measurements to the base station for initiating the handover or the mobile terminal can alternatively initiate the handover by itself based on these measured KPIs.

According to a second aspect, the invention relates to a serving cell, in particular a base station, configured to connect at least one mobile terminal, in particular an unmanned aerial vehicle (UAV), to a cellular network, the serving cell comprising: a radio transceiver configured to: receive information about a geographical position of the at least one mobile terminal, and transmit information about specific serving cells of the cellular network which are entitled to pick up the connection to the at least one mobile terminal from the serving cell once a handover criterion is fulfilled, to the at least one mobile terminal, wherein the information about the specific serving cells is based on the geographical position of the mobile terminal.

Using such a serving cell, e.g. base station improves handover procedures, in particular for UAVs moving in the lower airspace. The serving cell can use the GNSS information received from the mobile terminal as additional indicator for determining handover relations. Hence, handover can be defined in a more appropriate way to handle the observed connectivity pattern of mobile terminals in the lower airspace. Those cells are determined which are entitled to serve the UAV in a certain area. The GNSS / GPS coordinates of the UAV are recognized and provided to the network as additional indicator.

In an exemplary implementation form the serving cell comprises an interface to the cellular network configured to: transmit the information about the geographical position of the at least one mobile terminal to the cellular network, and receive the information about the specific serving cells from the cellular network.

Since the serving cell can be many kilometers away, the GNSS / GPS coordinates serve as another indicator to provide reliable information about the location of the mobile terminal to the network.

According to a third aspect, the invention relates to a network entity of a cellular network, comprising: an interface to a serving cell, wherein the interface is configured to: receive information from the serving cell about a geographical position of at least one mobile terminal, in particular an unmanned aerial vehicle, UAV; and transmit information to the serving cell about specific serving cells of the cellular network which are entitled to pick up the connection to the at least one mobile terminal from the serving cell once a handover criterion is fulfilled; and a controller configured to determine the information about the specific serving cells based on the geographical position of the at least one mobile terminal.

Using such a network entity, e.g. a network server, improves handover procedures, in particular for UAVs moving in the lower airspace. The network entity can use the GNSS information received from the serving cell about the mobile terminal as additional indicator for determining handover relations. Hence, handover can be defined in a more appropriate way to handle the observed connectivity pattern of mobile terminals in the lower airspace. Those cells are determined which are entitled to serve the UAV in a certain area. The GNSS / GPS coordinates of the UAV are recognized and provided to the network as additional indicator.

In an exemplary implementation form of the network entity, the controller is configured to obtain the information about the specific serving cells from a data base, in particular a lookup table.

This provides the advantage that the specific serving cells can be predefined, e.g. based on field tests or knowledge of the network. The data base or lookup table can thus accelerate and improve the handover process.

In an exemplary implementation form of the network entity, the controller is configured to determine the information about the specific serving cells based on an identity of the mobile terminal, in particular an International Mobile Subscriber Identity, IMSI, stored in a subscription server, in particular a Home Subscriber Server, HSS, of the cellular network.

This provides the advantage that designated handover (using one of the specific servering cells as new serving cell) as described in this disclosure can be applied to specific mobile terminals, e.g. UAVs or drones, but not applied to common mobile phones or smartphones operating on terrestrial level. These specific mobile terminals can be detected by their SIM module, e.g. their IMSI, which is stored in the subscription server, e.g. the HSS.

According to a fourth aspect, the invention relates to a method for scheduling handover for a mobile terminal, in particular an unmanned aerial vehicle (UAV), the method comprising: receiving information about a geographical position of the mobile terminal by a global navigation satellite system (GNSS) receiver; transmitting the geographical position of the mobile terminal to a serving cell of a cellular network which connects the mobile terminal to the cellular network; and receiving information about specific serving cells of the cellular network which are entitled to pick up the connection from the serving cell once a handover criterion is fulfilled, wherein the specific serving cells depend on the geographical position of the mobile terminal.

Using such a scheduling method improves handover procedures, in particular for UAVs moving in the lower airspace. The scheduling can use the GNSS information received from the serving cell about the mobile terminal as additional indicator for determining handover relations. Hence, handover can be defined in a more appropriate way to handle the observed connectivity pattern of mobile terminals in the lower airspace.

According to a fifth aspect, the invention relates to a computer readable non-transitory medium on which computer instructions are stored which, when executed by a computer, cause the computer to perform the method according to the fourth aspect of the invention.

According to a sixth aspect the invention relates to a computer program product comprising program code for performing the method according to the fourth aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, in which:
Fig. 1 shows a schematic diagram illustrating a map 100 in which connecting cells 102, 103, 104 during a vertical flight of a measurement device 101 (installed on a balloon) are plotted.
Fig. 2a shows a schematic diagram illustrating an exemplary cellular network 200a in which the usual cell neighborship is based on adjacent cells on terrestrial level.
Fig. 2b shows a schematic diagram illustrating an exemplary cellular network 200b in which cell relationship is based on potential cell relationships in a lower airspace connectivity scenario.
Fig. 3 shows a schematic diagram illustrating an exemplary cellular network 300 according to an implementation form in which predefined cells for handover are located around the current serving cell.
Fig. 4 shows a schematic diagram illustrating exemplary altitude related handover scenarios according to an implementation form.
Fig. 5 shows a schematic diagram illustrating an exemplary communication system 500 according to an implementation form with a mobile terminal 510 connected to a cellular network 540.
Fig. 6 shows a schematic diagram illustrating a method 600 for scheduling handover for a mobile terminal according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The communication systems as described hereinafter may include a plurality of different network entities or network nodes. A network entity or a network node may be a computer host or a computer server. A network entity or network node may be a hardware unit, e.g. a computer server, a network device, a PC, a tablet, a smartphone, a router, a gateway or a whole computer network. A network entity or a network node may be a software unit, e.g. an application program or software module on a PC, tablet, smartphone or any other hardware device.

The communication systems as described hereinafter may be implemented by various technologies, in particular utilizing communication networks based on mobile communication standards such as LTE, in particular LTE-A and/or OFDM and successor standards such as 5G or based on IEEE 802.11 networks such as WiFi. The components and network nodes of such systems may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

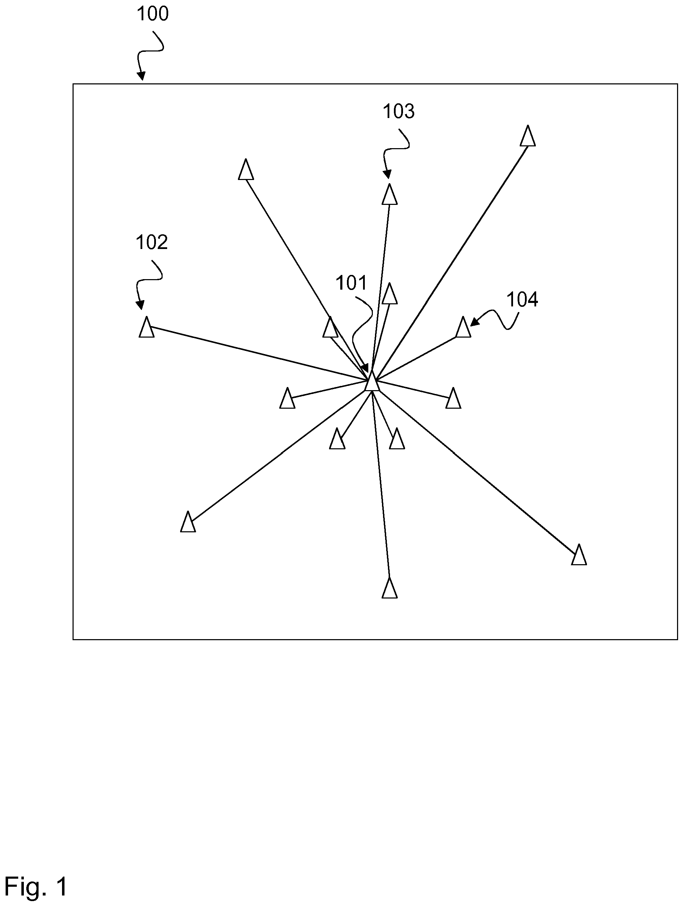

Fig. 1 shows a schematic diagram illustrating a map 100 in which connecting cells 102, 103, 104 during a vertical flight of a measurement device 101 (installed on a balloon) are plotted.

In the map 100 different radio cells 102, 103, 104 such as base stations or eNodeBs are depicted which are in line-of-sight of a measurement device 101, e.g. a mobile terminal, installed in a balloon. In this example, the balloon with the measurement device 101 moves from ground to heights between 100 meters and 650 meters above see level. The radio signals from these radio cells 102, 103, 104 are strong enough that the measurement device 101 is able to connect to these cells even if some of these cells, e.g. cells 102 and 103, are far away from the measurement device 101 and have no neighboring relation to a current serving cell of the measurement device 101.

Figure 1 illustrates that a mobile terminal 101 which is above the coverage of the terrestrial network will be served either by side-beams or via reflections. From a certain altitude - depending on terrain - the mobile terminal 101 is furthermore in line-of-sight with a number of base stations 102, 103, 104, in consequence side-beams of such stations can be in direct line to the mobile terminal 101. The mobile terminal 101 itself currently follows a relatively simple logic by connecting to the station with strongest signal.

On terrestrial level this is most likely the closest station or at least one in the closer environment due to shadowing effects and the quickly decreasing level of signal strength, in particular if obstacles are in direct line between transmitters. In the airspace this looks different while a number of stations 102, 103, 104 are in line of sight and the effects of reflection will change field strength in the airspace on top. In result a very diverse connection pattern emerges for a mobile terminal 101 moving in the airspace not only in horizontal but even in vertical direction. The emerging effects have already been proofed in practice by measurement flights.

To support handover between cells neighborhood relations are noticed in the network. Given, that handover for a moving terminal on terrestrial level takes place in fact in a geographical neighborhood to the adjacent cell the number of potential relations for one cell is limited. The relations are defined by feedback from the mobile terminal considering the observed cells with one of those becoming the next serving cell once the mobile terminal is handed over. The behavior of terrestrial used mobile terminals is quite identical, accordingly the neighborhood relations are quite stable based on the notice provided by the mobile terminals. In result the current limited number of potential entries in the lists for adjacent cells/handover support in each cell works fine.

With the behavior of mobile terminals 101 in the lower airspace as displayed in Figure 1 the logic does not work anymore, since the mobile terminal 101 recognizes much more cells 102, 103, 104 and may connect to a cell far away from current serving cell.

Accordingly the potential number of adjacent cells/handover support is increased by factors and works against current implementation which in worst case hinders handover.

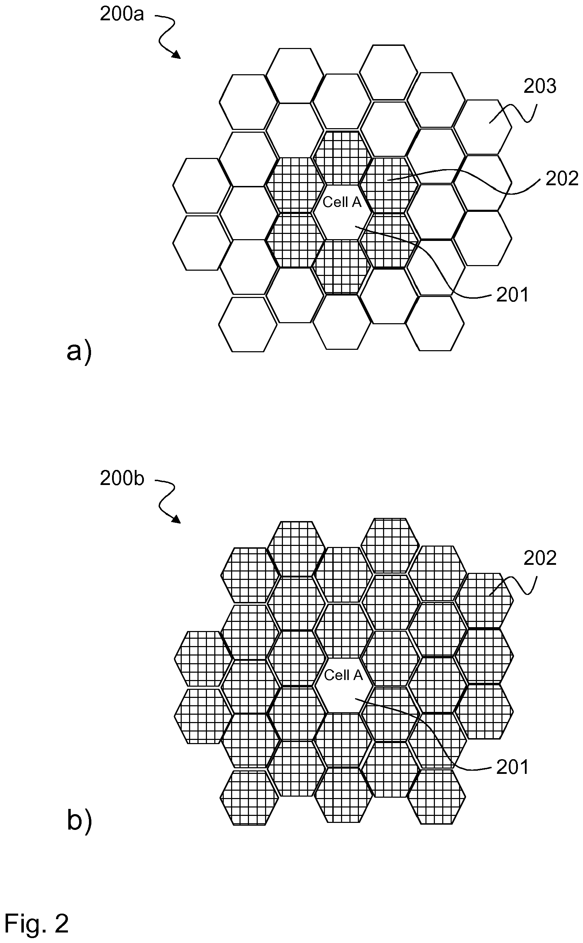

Fig. 2a shows a schematic diagram illustrating an exemplary cellular network 200a in which the usual cell neighborship is based on adjacent cells on terrestrial level.

The serving cell 201 is surrounded by an exemplary number of six adjacent cells 202. Further cells 203 that are not adjacent to the serving cell 201 surround the serving cell 201 in greater distance than the adjacent cells 202. Fig 2a shows the usual cell neighborship relation which is used in terrestrial network scenarios, i.e. in scenarios where the mobile terminal moves on the ground level, e.g. within a height between 0 meters and 1,50 meters. Once the signal from the serving cell is getting weaker, e.g. falls below a threshold, the mobile terminal performs handover to a neighboring cell that is selected as one cell from the adjacent cells 202 which has the strongest signal, i.e. the highest RSS (Received Signal Strength).

Fig. 2b shows a schematic diagram illustrating an exemplary cellular network 200b in which cell relationship is based on potential cell relationships in a lower airspace connectivity scenario.

The serving cell 201 is directly surrounded by an exemplary number of 6 adjacent cells 202 and further cells surround the serving cell 201 in greater distance. Fig 2b shows the cell neighborship relation which is used in lower airspace connectivity scenarios, i.e. in scenarios where the mobile terminal moves in the lower airspace, e.g. within a height between 1,50 meters and 300 to 750 meters or even up to about 3000 meters. The mobile terminal has a neighborship relation to an exemplary number of 29 cells and even more. Once the signal from the serving cell is getting weaker, e.g. falls below a threshold, the mobile terminal can perform handover to any of the neighboring cells 202 depicted in Fig. 2b, e.g. by selecting one cell from the neighboring cells 202 which has the strongest signal, i.e. the highest RSS (Received Signal Strength).

The large number of neighboring cells which are candidates for a handover may increase the complexity of the handover process and may possibly destabilize the handover since base stations that are in far distance with respect to each other may have to exchange connection data, possibly via different networks. Hence, alternative mechanisms are presented in this disclosure to define adjacent cells / handover in a more appropriate way to handle the observed connectivity pattern of mobile terminals in the lower airspace.

The objective is to determine those cells which are entitled to serve the UAV in a certain area. To indicate the current position of the UAV the GPS coordinates of the UAV are recognized and provided to the network as additional indicator. Since - as it is obvious from Figure 1 - the serving cell can be many kilometers away the information from the network in such conditions is not sufficient to define the position of the mobile terminal (in this case the UAV) based on the current serving cell, but another indicator is necessary to provide good information and determine the next best serving cell once handover shall be done to another cell without running into issues as described above.

For this reasons the GPS (or generally GNSS) coordinates are introduced additionally as further information to guide the handover-mechanism in these specific circumstances. Based on the information about the geographical position by the GPS coordinates the network gets the opportunity to define those cells in the environment which are entitled to pick up the connection once the signal from current serving cell becomes weak. From network perspective this selection of cells becomes the adjacent cells for this class of terminals. In effect the number of adjacent cells in this specific context is limited once again and fits in current design for handover support.

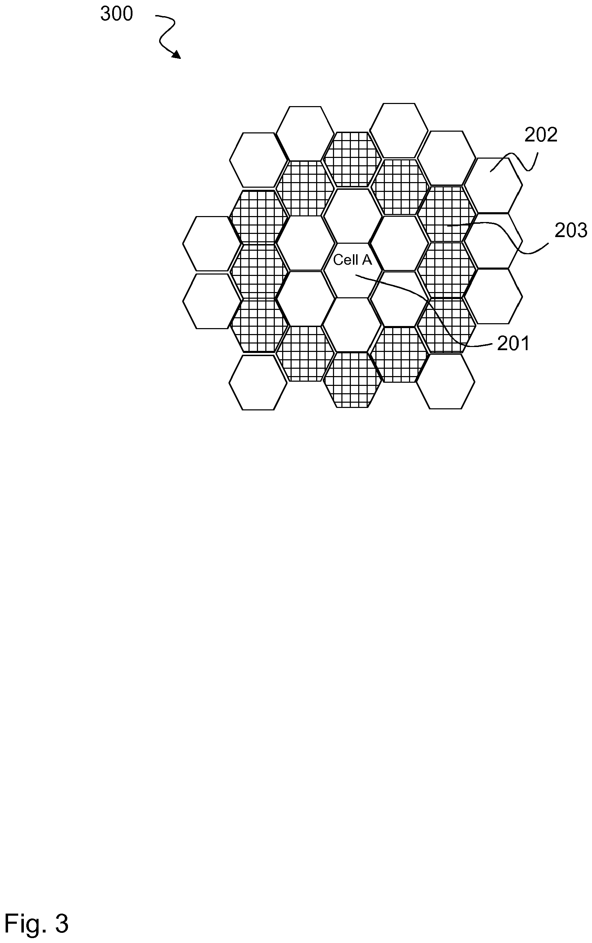

Figures 3 to 6 as described in the following illustrates such alternative mechanisms.

Fig. 3 shows a schematic diagram illustrating an exemplary cellular network 300 according to an implementation form in which predefined cells for handover are located aroung the current serving cell.

Fig. 3 shows predefined cells 302 for handover around the current serving cell 201, for example a number of predefined cells limited to an exemplary number of 12. These predefined cells 302 may be located on a ring around the serving cell 201 but not including the (exemplary number of 6) cells that are contiguous to the serving cell 201. Any other cells may be selected as predefined cells 302, e.g. a subset of these 12 cells 302, for example only the upper, lower, right-side and left-side cells or other patterns.

Based on this information handover will not be enabled to all possible cells but only to a limited number of cells 302, i.e., the predefined cells 302 which may be defined in advance. Those cells 302 are entitled to take over a mobile terminal from a specific position once a handover between the cell currently serving the mobile terminal and another cell with a stronger signal shall take place. This does not have to be such simple as indicated in Figure 3, but a more sophisticated selection of cells entitled to pick up the connection once the current serving cell becomes too weak is possible, e.g. following the topography of the region or specific traffic patterns relevant in a certain area.

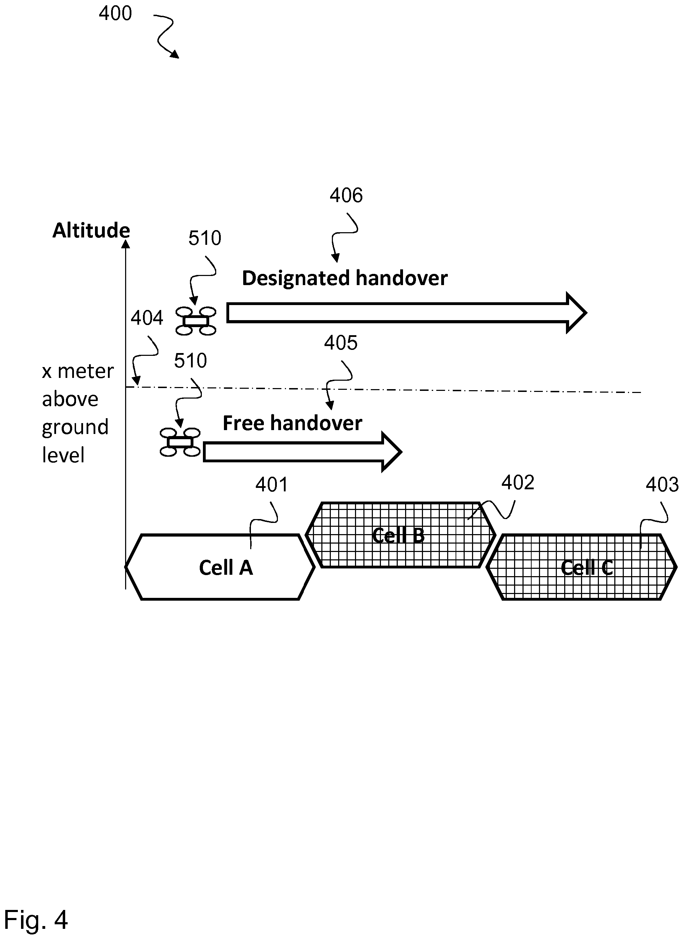

Fig. 4 shows a schematic diagram 400 illustrating exemplary altitude related handover scenarios 405, 406 according to an implementation form.

The situation of a multitude of potential handover relations depends very much on the line-of-sight relation to high number of cells, e.g. as illustrated in Fig. 1. Except in situations with a very special topography this applies in particular for mobile terminals 510 moving in the lower airspace such as UAVs.

However, since those mobile terminals 510 start on ground level and mission scenarios are possible which are very close to the ground level even in flight operation it makes sense not to generally adopt those mobile terminals 510 to the specific handover scenario but depending on the altitude 407 of operation which correlates to the likelihood that handover scenarios to cells far away applies.

To achieve this not only longitude and latitude are taken from GPS-signal but altitude 407 as well. Alternatively altitude information can be taken from other measurements from the mobile terminal 510 such as barometrical pressure. This information can be added to the general procedure as described above. The information about altitude 407 can be used in such way that starting from the defined altitude 404 the procedures for specific handover mechanisms 406 will apply while under this altitude 404 the normal hand over 405 based on adjacent cells takes place as usual.

This split makes sense for two reasons: Below a certain altitude, e.g. altitude 404 shown in Fig. 4, a UAV 510 may connect and behave like any other terrestrial mobile terminal. Accordingly the usual mechanisms 405 (free handover) can be applied since the effects about shadowing and reflections as well as reach or range of signal are similar for all mobile terminals in that range of altitude.

Since the UAV 510 starts from ground it registers in the most appropriate cell (e.g. Cell A 401 depicted in Fig. 4) just at this position. A dedicated cell according to the GPS supported handover mechanism 406 may not work or even be not available in that place. This may appear when the UAV 510 ascends and sees more cells (e.g. cells B 402 and C 403) in the environment which then can be subject for a specific selection of the next serving cell.

In the following an exemplary realization or working mechanism of is described. To realize such procedure the mobile terminal / UAV 510 has to be recognized as one which is subject of the described procedure. This can be started within the registration process with dedicating a specific SIM/eSIM subscription to the mobile terminal 510. Based on the assigned IMSI (International Mobile Subscriber Identity) and/or MSISDN (Mobile Subscriber Integrated Services Digital Number) the mobile terminal 510 (in fact the inserted SIM/eSIM) is accordingly determined. This information may be stored in a Home Subscriber Server (HSS) and may be provided to the network via the Mobile Mobility Entity (or Mobility Management Entity). Once the mobile terminal 510 notifies (i.e. registers) itself to the network the information about the specific treatment is provided to the serving cell in which the notification (or registration process) takes place.

The mobile terminal 510 is connected while data transmission takes place. Beyond holding the connection to the serving cells the mobile terminal 510 detects other cells in its environment and measures the KPIs (Key Performance Indicators) such as field strength of those and provides these KPIs to the network. Based on this data the serving cell 401 can decide on handover to one of the detected cells 402, 403 once a certain threshold is reached. Usually the serving cell does a resource status request to the target cell, if the resources are available handover is introduced based on the handover algorithms.

In this phase the geographical position of the mobile terminal 510 is applied as additional information. Since the mobile terminal 510 is determined as UAV via information of the Mobile Mobility Entity (MME) (or Mobility Management Entity) and the Home Subscriber Server (HSS) not all cells are automatically entitled to take over the connection but only those cells which are deposited as serving cells for UAVs in relation to the current cell. As described above this can be combined with an altitude information 407 on top with all cells entitled for becoming the target cell up to x m altitude of the mobile terminal 510 and only a selection of target cells once x m has been exceeded.

Beyond these additional criteria for selecting the target cell the hand over process may follow the usual principals in LTE networks as described above.

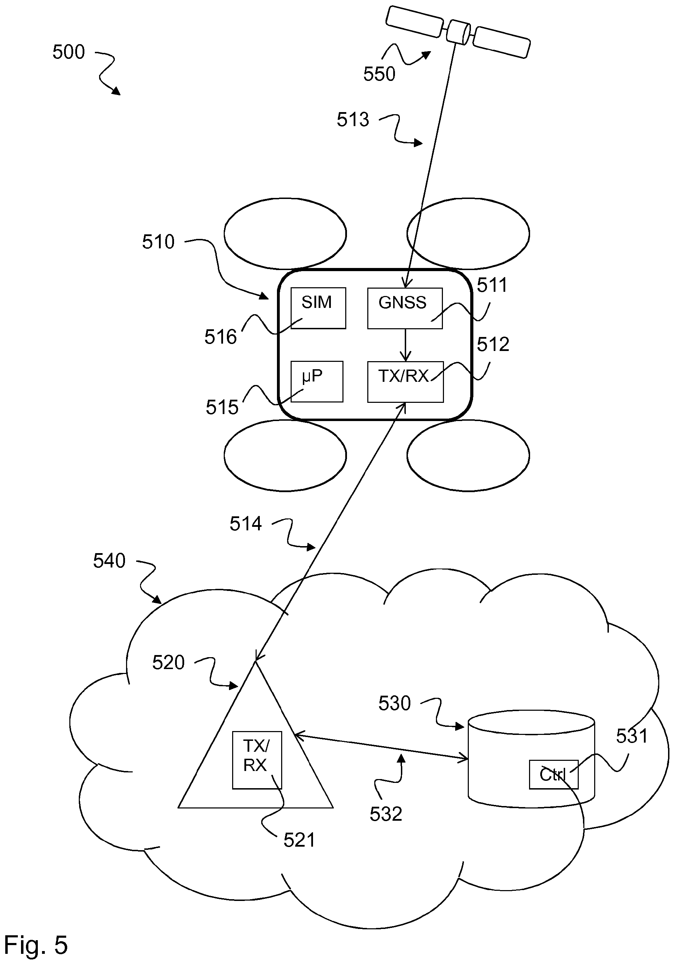

Fig. 5 shows a schematic diagram illustrating an exemplary communication system 500 according to an implementation form with a mobile terminal 510 connected to a cellular network 540. The communication system 500 includes a mobile terminal 510, e.g. a UAV, e.g. a drone as described above with respect to Fig. 4, a satellite 550 transmitting positioning information and a cellular network 540 including one or more cells, e.g. base stations or eNodeBs, and one or more network entities, e.g. network servers. An exemplary serving cell 520 and an exemplary network node 530 of the cellular network 540 is depicted in Fig. 5. The serving cell 520 may correspond to the serving cell 201 of the cellular network 300 depicted in Fig. 3.

The mobile terminal 510 comprises a global navigation satellite system (GNSS) receiver 511 configured to receive information about a geographical position 513 of the mobile terminal 510; and a radio transceiver 512, e.g. an LTE transceiver.

The radio transceiver 512 is configured to transmit the geographical position 513 of the mobile terminal 510 to the serving cell 520 of the cellular network 540 which connects the mobile terminal 510 to the cellular network 540. The radio transceiver 512 is further configured to receive information 514 about specific serving cells, e.g. specific serving cells 302 as depicted in Fig. 3, of the cellular network 540, 300 which are entitled to pick up the connection from the serving cell 520, 201 once a handover criterion is fulfilled. The specific serving cells 302 depend on the geographical position 513 of the mobile terminal 510. A handover criterion may be fulfilled if a received signal strength (RSS) of a signal from the serving cell falls below a threshold or if the RSS of the signal from the serving cell is lower than an RSS of a signal from a cell of the specific serving cells 302.

One or more of the specific serving cells 302 may be located non-contiguously to the serving cell 520, 201, e.g. as shown in Fig. 3. At least a portion of the specific serving cells 302 may be located on a ring of cells which are non-neighboring to the serving cell 520, 201, e.g. as shown in Fig. 3. The information 514 about the specific serving cells 302 may depends on a topography and/or traffic patterns of a region surrounding the serving cell 520, 201.

The information 514 about the specific serving cells 302 may depend on a number of cells to which the mobile terminal 510 has a line-of-sight relation, e.g. cells 102, 103, 104 as depicted in Fig. 1.

In particular, the information 514 about the specific serving cells 302 may depend on an altitude of the mobile terminal 510, e.g. an altitude 407 as illustrated in Fig. 4. The mobile terminal 510 may comprise a processor 515 configured to process a handover to one of the specific serving cells 302 once the handover criterion is fulfilled and if an altitude 407 of the mobile terminal 510 is above a threshold 404, in particular a threshold 404 indicating entering a lower airspace. Below the altitude threshold 404, the mobile terminal 510 may perform a free handover 405, e.g. handover to the strongest neighbor cell, and above the altitude threshold 404 the mobile terminal 510 may perform a disignated handover 406, i.e. based on the specific serving cells 302 selected or determined by the network.

The mobile terminal 510 may comprise a subscription module 516, in particular a SIM or eSIM module, configured to store an identity of the mobile terminal 510, in particular an International Mobile Subscriber Identity, IMSI. The information 514 about the specific serving cells 302 can depend on the identity of the mobile terminal 510.

The mobile terminal 510 may comprise a monitoring module, configured to monitor Key Performance Indicators, KPIs, in particular signal strength and/or signal quality of cells (e.g. cells 302, 303 depicted in Fig. 3) of the cellular network 540, 300 which are different from the serving cell 520, 201, and to transmit the monitored KPIs via the serving cell 520, 201 to the cellular network 540, 300.

The serving cell 520 is configured to connect at least one mobile terminal, e.g. the mobile terminal 510 depicted in Fig. 5, to the cellular network 540. The serving cell 520 comprises a radio transceiver 521 which is configured to receive information about a geographical position 513 of the at least one mobile terminal 510. The radio transceiver 521 is further configured to transmit information about specific serving cells (e.g. specific serving cells 302 as shown in Fig. 3) of the cellular network 540 which are entitled to pick up the connection to the at least one mobile terminal 510 from the serving cell 520 once a handover criterion is fulfilled, to the at least one mobile terminal 510. The information about the specific serving cells 302 is based on the geographical position 513 of the mobile terminal 510.

The serving cell 520 may comprise an interface 532 to the cellular network 540, e.g. to the network entity 530 of the cellular network 540. The interface 532 is configured to transmit the information about the geographical position 513 of the at least one mobile terminal 510 to the cellular network 540, and receive the information about the specific serving cells 302 from the cellular network 540.

The network entity 530 of the cellular network 540 comprises an interface 532 to the serving cell 520 and optionally to other serving cells not depicted in Fig. 5. The interface 532 is configured to receive information from the serving cell 520 about a geographical position 513 of at least one mobile terminal 510. The interface 532 is further configured to transmit information to the serving cell 520 about specific serving cells 302 of the cellular network 540 which are entitled to pick up the connection to the at least one mobile terminal 510 from the serving cell 520 once a handover criterion is fulfilled. The network entity 530 further includes a controller 531 configured to determine the information about the specific serving cells 302 based on the geographical position 513 of the at least one mobile terminal 510.

The controller 531 may be configured to obtain the information about the specific serving cells 302 from a data base, e.g. a lookup table. Such a lookup table may include positions of multiple serving cells and heights above these serving cells as input and cell identities of specific serving cells to which a handover can be performed as output. If the mobile terminal is connected to one of the serving cells from the lookup table input and located close to one of the heights from the lookup table input, a handover to one of the specific serving cells from the lookup table output can be performed.

The controller 531 may be configured to determine the information about the specific serving cells 302 based on an identity of the mobile terminal 510, in particular an International Mobile Subscriber Identity, IMSI, stored in a subscription server, in particular a Home Subscriber Server, HSS, of the cellular network 540.

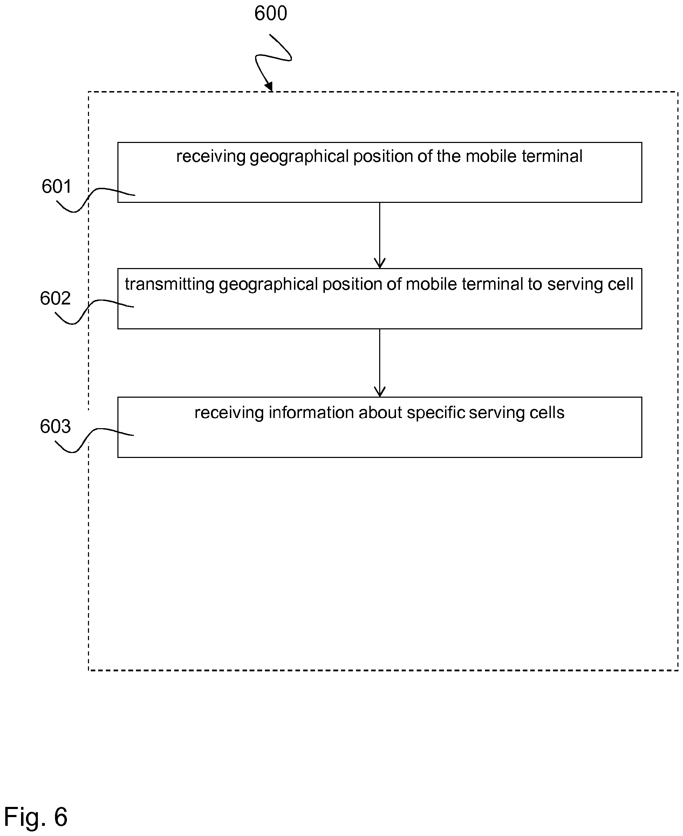

Fig. 6 shows a schematic diagram illustrating a method 600 for scheduling handover for a mobile terminal according to the disclosure. The method 600 is used for scheduling handover for a mobile terminal, e.g. a mobile terminal 510 as described above with respect to Figures 4 and 5, in particular an UAV.

The method 600 comprises receiving 601 information about a geographical position 513 of the mobile terminal 510 by a global navigation satellite system (GNSS) receiver 511, e.g. as described above with respect to Figure 5.

The method 600 further comprises transmitting 602 the geographical position 513 of the mobile terminal 510 to a serving cell 520, 201 of a cellular network 540, 300 which connects the mobile terminal 510 to the cellular network 540, 300, e.g. as described above with respect to Figure 5.

The method 600 further comprises receiving 603 information about specific serving cells 302 of the cellular network 540, 300 which are entitled to pick up the connection from the serving cell 520, 201 once a handover criterion is fulfilled, wherein the specific serving cells 302 depend on the geographical position 513 of the mobile terminal 510.

The method 600 may be applied in communication systems as described above with respect to Figures 1 to 6.

The methods, systems and devices described herein may be implemented as electrical and/or optical circuit within a chip or an integrated circuit or an application specific integrated circuit (ASIC). The invention can be implemented in digital and/or analogue electronic and optical circuitry. The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The present disclosure also supports a computer program product including computer executable code or computer executable instructions that, when executed, causes at least one computer to execute the performing and computing steps described herein, in particular the method 600 as described above with respect to Fig. 6 and the techniques described above with respect to Figs. 1-5. Such a computer program product may include a readable non-transitory storage medium storing program code thereon for use by a computer. The program code may perform the methods and techniques as described above with respect to Figures 1 to 6.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate implementations may be substituted for the specific aspects shown and described without departing from the scope of the appended claims. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims the invention may be practiced otherwise than as specifically described herein.

## Claims

1. A mobile terminal (510), in particular an unmanned aerial vehicle (UAV), comprising:
a global navigation satellite system (GNSS) receiver (511) configured to receive information about a geographical position (513) of the mobile terminal (510); and
a radio transceiver (512) configured to:
transmit the geographical position (513) of the mobile terminal (510) to a serving cell (520, 201) of a cellular network (540, 300) which connects the mobile terminal (510) to the cellular network (540, 300), and
receive information (514) about other cells (302) of the cellular network (540, 300) which are entitled to pick up the connection from the serving cell (520, 201) once a handover criterion is fulfilled, wherein the other cells (302) depend on the geographical position (513) of the mobile terminal (510),
**characterised in that** the mobile terminal is configured to apply, based on an altitude (407) of the mobile terminal (510), a free handover by using a new serving cell located contiguously to the serving cell (520, 201) or a designated handover by using a new serving cell from one of the other cells.

2. The mobile terminal (510) of claim 1,
wherein at least one of the other cells (302) is located non-contiguously to the serving cell (520, 201).

3. The mobile terminal (510) of claim 1 or 2,
wherein at least a portion of the other cells (302) are located on a ring of cells which are non-neighboring to the serving cell (520, 201).

4. The mobile terminal (510) of one of the preceding claims,
wherein the information (514) about the other cells (302) depends on a topography and/or traffic patterns of a region surrounding the serving cell (520, 201).

5. The mobile terminal (510) of one of the preceding claims,
wherein the information (514) about the other cells (302) depends on the number of cells (102, 103, 104) to which the mobile terminal (510) has a line-of-sight relation.

6. The mobile terminal (510) of one of the preceding claims,
wherein the information (514) about the other cells (302) depends on an altitude (407) of the mobile terminal (510).

7. The mobile terminal (510) of one of the preceding claims, comprising:
a processor (515) configured to process a handover to one of the other cells (302) once the handover criterion is fulfilled and if an altitude (407) of the mobile terminal (510) is above a threshold (404), in particular a threshold (404) indicating entering a lower airspace.

8. The mobile terminal (510) of one of the preceding claims, comprising:
a subscription module (516), in particular a SIM or eSIM module, configured to store an identity of the mobile terminal (510), in particular an International Mobile Subscriber Identity, IMSI,
wherein the information (514) about the other cells (302) depends on the identity of the mobile terminal (510).

9. The mobile terminal (510) of one of the preceding claims, comprising:
a monitoring module, configured to monitor Key Performance Indicators, KPIs, in particular signal strength and/or signal quality of cells (302, 303) of the cellular network (540, 300) which are different from the serving cell (520, 201), and to transmit the monitored KPIs via the serving cell (520, 201) to the cellular network (540, 300).

10. A serving cell (520, 201), in particular a base station, configured to connect at least one mobile terminal (510), in particular an unmanned aerial vehicle (UAV), to a cellular network (540, 300), the serving cell (520, 201) comprising:
a radio transceiver (521) configured to:
receive information about a geographical position (513) of the at least one mobile terminal (510), and
transmit information about other cells (302) of the cellular network (540, 300) which are entitled to pick up the connection to the at least one mobile terminal (510) from the serving cell (520, 201) once a handover criterion is fulfilled, to the at least one mobile terminal (510),
wherein the information about the other cells (302) is based on the geographical position (513) of the mobile terminal (510),
**characterised in that** the serving cell holds information about a specific treatment of the mobile terminal indicating to apply, based on an altitude (407) of the mobile terminal (510), a free handover by using a new serving cell located contiguously to the serving cell (520, 201) or a designated handover by using a new serving cell from one of the other cells.

11. The serving cell (520, 201) of claim 10, comprising:
an interface (532) to the cellular network (540, 300) configured to:
transmit the information about the geographical position (513) of the at least one mobile terminal (510) to the cellular network (540, 300), and
receive the information about the other cells (302) from the cellular network (540, 300).

12. A network entity (530) of a cellular network (540, 300), comprising:
an interface (532) to a serving cell (520, 201), wherein the interface (532) is configured to:
receive information from the serving cell (520, 201) about a geographical position (513) of at least one mobile terminal (510), in particular an unmanned aerial vehicle, UAV; and
transmit information to the serving cell (520, 201) about other cells (302) of the cellular network (540, 300) which are entitled to pick up the connection to the at least one mobile terminal (510) from the serving cell (520, 201) once a handover criterion is fulfilled; and
a controller (531) configured to determine the information about the other cells (302) based on the geographical position (513) of the at least one mobile terminal (510),
**characterised in that** the network entity holds information about a specific treatment of the mobile terminal indicating to apply, based on an altitude (407) of the mobile terminal (510), a free handover by using a new serving cell located contiguously to the serving cell (520, 201) or a designated handover by using a new serving cell from one of the other cells.

13. The network entity (530) of claim 12,
wherein the controller (531) is configured to obtain the information about the other cells (302) from a data base, in particular a lookup table.

14. The network entity (530) of claim 11 or 12,
wherein the controller (531) is configured to determine the information about the other cells (302) based on an identity of the mobile terminal (510), in particular an International Mobile Subscriber Identity, IMSI, stored in a subscription server, in particular a Home Subscriber Server, HSS, of the cellular network (540, 300).

15. A method (600) for scheduling handover for a mobile terminal (510), in particular an unmanned aerial vehicle (UAV), the method comprising:
receiving (601) information about a geographical position (513) of the mobile terminal (510) by a global navigation satellite system (GNSS) receiver (511);
transmitting (602) the geographical position (513) of the mobile terminal (510) to a serving cell (520, 201) of a cellular network (540, 300) which connects the mobile terminal (510) to the cellular network (540, 300);
receiving (603) information about other cells (302) of the cellular network (540, 300) which are entitled to pick up the connection from the serving cell (520, 201) once a handover criterion is fulfilled, wherein the other cells (302) depend on the geographical position (513) of the mobile terminal (510); and
applying, based on an altitude (407) of the mobile terminal (510), a free handover by using a new serving cell located contiguously to the serving cell (520, 201) or a designated handover by using a new serving cell from one of the other cells.

## Patentansprüche

1. Mobiles Endgerät (510), insbesondere ein unbemanntes Luftfahrzeug (UAV), das Folgendes umfasst:
einen Empfänger (511) eines globalen Navigationssatellitensystems (GNSS-Empfänger), der konfiguriert ist, Informationen über eine geographische Position (513) des mobilen Endgeräts (510) zu empfangen; und
eine Funk-Sende-/Empfangseinrichtung (512), die konfiguriert ist zum
Senden der geographischen Position (513) des mobilen Endgeräts (510) zu einer dienenden Zelle (520, 201) eines zellularen Netzes (540, 300), das das mobile Endgerät (510) mit einem zellularen Netz (540, 300) verbindet, und
Empfangen von Informationen (514) über weitere Zellen (302) des zellularen Netzes (540, 300), die berechtigt sind, die Verbindung von der dienenden Zelle (520, 201) aufzunehmen, nachdem ein Übergabekriterium erfüllt ist, wobei die weiteren Zellen (302) von der geographischen Position (513) des mobilen Endgeräts (510) abhängen,
**dadurch gekennzeichnet, dass** das mobile Endgerät konfiguriert ist, auf der Grundlage einer Höhe (407) des mobilen Endgeräts (510) eine freie Übergabe unter Verwendung einer neuen dienenden Zelle, die sich angrenzend an die dienende Zelle (520, 201) befindet, oder eine festgelegte Übergabe unter Verwendung einer neuen dienenden Zelle von einer der weiteren Zellen anzuwenden.

2. Mobiles Endgerät (510) nach Anspruch 1, wobei
sich mindestens eine der weiteren Zellen (302) nicht an die dienende Zelle (520, 201) angrenzend befindet.

3. Mobiles Endgerät (510) nach Anspruch 1 oder 2, wobei
sich mindestens ein Teil der weiteren Zellen (302) in einem Ring von Zellen, die der dienenden Zelle (520, 201) nicht benachbart sind, befindet.

4. Mobiles Endgerät (510) nach einem der vorhergehenden Ansprüche, wobei
die Informationen (514) über die weiteren Zellen (302) von einer Topografie und/oder Verkehrsmustern eines Bereichs, der die dienende Zelle (520, 201) umgibt, abhängen.

5. Mobiles Endgerät (510) nach einem der vorhergehenden Ansprüche, wobei
die Informationen (514) über die weiteren Zellen (302) von der Anzahl Zellen (102, 103, 104), zu denen das mobile Endgerät (510) eine Sichtlinienbeziehung besitzt, abhängen.

6. Mobiles Endgerät (510) nach einem der vorhergehenden Ansprüche, wobei
die Informationen (514) über die weiteren Zellen (302) von einer Höhe (407) des mobilen Endgeräts (510) abhängen.

7. Mobiles Endgerät (510) nach einem der vorhergehenden Ansprüche, das Folgendes umfasst:
einen Prozessor (515), der konfiguriert ist, eine Übergabe zu einer der weiteren Zellen (302) zu verarbeiten, nachdem das Übergabekriterium erfüllt ist und wenn eine Höhe (407) des mobilen Endgeräts (510) über einem Schwellenwert (404), insbesondere einem Schwellenwert (404), der einen niedrigeren Luftraum angibt, liegt.

8. Mobiles Endgerät (510) nach einem der vorhergehenden Ansprüche, das Folgendes umfasst:
ein Abonnementmodul (516), insbesondere ein SIM- oder ein eSIM-Modul, das konfiguriert ist, eine Identität des mobilen Endgeräts (510), insbesondere eine internationale Mobilteilnehmeridentität, IMSI, zu speichern, wobei
die Informationen (514) über die weiteren Zellen (302) von der Identität des mobilen Endgeräts (510) abhängen.

9. Mobiles Endgerät (510) nach einem der vorhergehenden Ansprüche, das Folgendes umfasst:
ein Überwachungsmodul, das konfiguriert ist, Schlüsselleistungsindikatoren, KPIs, insbesondere eine Signalstärke und/oder eine Signalqualität von Zellen (302, 303) des zellularen Netzes (540, 300), die von der dienende Zelle (520, 201) verschieden sind, zu überwachen und die überwachten KPIs mittels der dienende Zelle (520, 201) zum zellularen Netz (540, 300) zu senden.

10. Dienende Zelle (520, 201), insbesondere eine Basisstation, die konfiguriert ist, mindestens ein mobiles Endgerät (510), insbesondere ein unbemanntes Luftfahrzeug (UAV), mit einem zellularen Netz (540, 300) zu verbinden, wobei die dienende Zelle (520, 201) Folgendes umfasst:
eine Funk-Sende-/Empfangseinrichtung (521), die konfiguriert ist zum
Empfangen von Informationen über eine geographische Position (513) des mindestens einen mobilen Endgeräts (510) und
Senden von Informationen über weitere Zellen (302) des zellularen Netzes (540, 300), die berechtigt sind, die Verbindung von der dienenden Zelle (520, 201) zum mindestens einen mobilen Endgerät (510) aufzunehmen, nachdem ein Übergabekriterium erfüllt ist, zum mindestens einen mobilen Endgerät (510), wobei
die Informationen über die weiteren Zellen (302) die geographische Position (513) des mobilen Endgeräts (510) als Grundlage verwenden,
**dadurch gekennzeichnet, dass** die dienende Zelle Informationen über eine bestimmte Behandlung des mobilen Endgeräts enthält, die angeben, auf der Grundlage einer Höhe (407) des mobilen Endgeräts (510) eine freie Übergabe unter Verwendung einer neuen dienenden Zelle, die sich angrenzend an die dienende Zelle (520, 201) befindet, oder einer festgelegten Übergabe unter Verwendung einer neuen dienenden Zelle von einer der weiteren Zellen anzuwenden.

11. Dienende Zelle (520, 201) nach Anspruch 10, die Folgendes umfasst:
eine Schnittstelle (532) zum zellularen Netz (540, 300), die konfiguriert ist zum
Senden der Informationen über die geographische Position (513) des mindestens einen mobilen Endgeräts (510) zum zellularen Netz (540, 300) und
Empfangen der Informationen über die weiteren Zellen (302) vom zellularen Netz (540, 300).

12. Netzeinheit (530) eines zellularen Netzes (540, 300), die Folgendes umfasst:
eine Schnittstelle (532) zu einer dienenden Zelle (520, 201), wobei die Schnittstelle (532) konfiguriert ist zum
Empfangen von Informationen von der dienenden Zelle (520, 201) über eine geographische Position (513) mindestens eines mobilen Endgeräts (510), insbesondere eines unbemannten Luftfahrzeugs (UAV); und
Senden von Informationen zu einer dienenden Zelle (520, 201) über weitere Zellen (302) des zellularen Netzes (540, 300), die berechtigt sind, die Verbindung zum mindestens einen mobilen Endgerät (510) von der dienenden Zelle (520, 201) aufzunehmen, nachdem ein Übergabekriterium erfüllt ist; und
eine Steuereinheit (531), die konfiguriert ist, die Informationen über die weiteren Zellen (302) auf der Grundlage der geographischen Position (513) des mindestens einen mobilen Endgeräts (510) zu bestimmen,
**dadurch gekennzeichnet, dass** Netzeinheit Informationen über eine bestimmte Behandlung des mobilen Endgeräts enthält, die angeben, auf der Grundlage einer Höhe (407) des mobilen Endgeräts (510) eine freie Übergabe unter Verwendung einer neuen dienenden Zelle, die sich angrenzend an die dienende Zelle (520, 201) befindet, oder einer festgelegten Übergabe unter Verwendung einer neuen dienenden Zelle von einer der weiteren Zellen anzuwenden.

13. Netzeinheit (530) nach Anspruch 12, wobei
die Steuereinheit (531) konfiguriert ist, die Informationen über die weiteren Zellen (302) von einer Datenbank, insbesondere einer Nachschlagetabelle zu erhalten.

14. Netzeinheit (530) nach Anspruch 11 oder 12, wobei
die Steuereinheit (531) konfiguriert ist, die Informationen über die weiteren Zellen (302) auf der Grundlage einer Identität des mobilen Endgeräts (510), insbesondere einer internationalen Mobilteilnehmeridentität, IMSI, zu bestimmen, die in einem Abonnement-Server, insbesondere einem Heimatteilnehmer-Server, HSS, des zellularen Netzes (540, 300) gespeichert ist.

15. Verfahren (600) zum Planen einer Übergabe für ein mobiles Endgerät (510), insbesondere ein unbemanntes Luftfahrzeug (UAV), wobei das Verfahren Folgendes umfasst:
Empfangen (601) von Informationen über eine geographische Position (513) des mobilen Endgeräts (510) durch einen Empfänger (511) eines globalen Navigationssatellitensystems (GNSS-Empfänger);
Senden (602) der geographische Position (513) des mobilen Endgeräts (510) zu einer dienenden Zelle (520, 201) eines zellularen Netzes (540, 300), das das mobile Endgerät (510) mit dem zellularen Netz (540, 300) verbindet;
Empfangen (603) von Informationen über weitere Zellen (302) des zellularen Netzes (540, 300), die berechtigt sind, die Verbindung von der dienenden Zelle (520, 201) aufzunehmen, nachdem ein Übergabekriterium erfüllt ist, wobei die weiteren Zellen (302) von der geographischen Position (513) des mobilen Endgeräts (510) abhängen; und
Anwenden auf der Grundlage einer Höhe (407) des mobilen Endgeräts (510) einer freien Übergabe unter Verwendung einer neuen dienenden Zelle, die sich angrenzend an die dienende Zelle (520, 201) befindet, oder einer festgelegten Übergabe unter Verwendung einer neuen dienenden Zelle von einer der weiteren Zellen.

## Revendications

1. Terminal mobile (510), en particulier un véhicule aérien sans pilote (UAV), comprenant :
un récepteur de système de positionnement par satellites (GNSS) (511) configuré pour recevoir des informations relatives à une position géographique (513) du terminal mobile (510) ; et
un émetteur-récepteur radio (512) configuré pour :
transmettre la position géographique (513) du terminal mobile (510) à une cellule de desserte (520, 201) d'un réseau cellulaire (540, 300) qui connecte le terminal mobile (510) au réseau cellulaire (540, 300), et
recevoir des informations (514) relatives à d'autres cellules (302) du réseau cellulaire (540, 300) qui sont autorisées à utiliser la connexion depuis la cellule de desserte (520, 201) une fois qu'un critère de transfert est satisfait, les autres cellules (302) dépendant de la position géographique (513) du terminal mobile (510),
**caractérisé en ce que**
le terminal mobile est configuré pour appliquer, sur la base d'une altitude (407) du terminal mobile (510), un transfert libre en utilisant une nouvelle cellule de desserte située en contiguïté avec la cellule de desserte (520, 201) ou un transfert désigné en utilisant une nouvelle cellule de desserte parmi une des autres cellules.

2. Terminal mobile (510) selon la revendication 1,
dans lequel au moins une des autres cellules (302) n'est pas située en contiguïté avec la cellule de desserte (520, 201).

3. Terminal mobile (510) selon la revendication 1 ou 2,
dans lequel au moins une partie des autres cellules (302) est située sur un anneau de cellules qui ne sont pas voisines de la cellule de desserte (520, 201) .

4. Terminal mobile (510) selon l'une des revendications précédentes,
dans lequel les informations (514) relatives aux autres cellules (302) dépendent d'une topographie et/ou de configurations de trafic d'une région entourant la cellule de desserte (520, 201).

5. Terminal mobile (510) selon l'une des revendications précédentes,
dans lequel les informations (514) relatives aux autres cellules (302) dépendent du nombre de cellules (102, 103, 104) avec lesquelles le terminal mobile (510) a une relation de visibilité directe.

6. Terminal mobile (510) selon l'une des revendications précédentes,
dans lequel les informations (514) relatives aux autres cellules (302) dépendent d'une altitude (407) du terminal mobile (510).

7. Terminal mobile (510) selon l'une des revendications précédentes, comprenant :
un processeur (515) configuré pour traiter un transfert sur une des autres cellules (302) une fois que le critère de transfert est satisfait et si une altitude (407) du terminal mobile (510) est supérieure à un seuil (404), en particulier un seuil (404) indiquant l'entrée dans un espace aérien inférieur.

8. Terminal mobile (510) selon l'une des revendications précédentes, comprenant:
un module d'abonnement (516), en particulier un module SIM ou eSlM, configuré pour mémoriser une identité du terminal mobile (510), en particulier une identité d'abonné mobile international, IMSI,
dans lequel les informations (514) relatives aux autres cellules (302) dépendent de l'identité du terminal mobile (510).

9. Terminal mobile (510) selon l'une des revendications précédentes, comprenant :
un module de surveillance, configuré pour surveiller des indicateurs de performance clés, KPI, en particulier la force de signal et/ou la qualité de signal des cellules (302, 303) du réseau cellulaire (540, 300) lesquelles sont différentes de la cellule de desserte (520, 201) et transmettre les KPI surveillés par l'intermédiaire de la cellule de desserte (520, 201) au réseau cellulaire (540, 300).

10. Cellule de desserte (520, 201) en particulier une station de base, configurée pour connecter au moins un terminal mobile (510), en particulier un véhicule aérien sans pilote (UAV), à un réseau cellulaire (540, 300), la cellule de desserte (520, 201) comprenant :
un émetteur-récepteur radio (521) configuré pour :
recevoir des informations relatives à une position géographique (513) de l'au moins un terminal mobile (510), et
transmettre des informations relatives à d'autres cellules (302) du réseau cellulaire (540, 300) qui sont autorisées à utiliser la connexion allant à l'au moins un terminal mobile (510) depuis la cellule de desserte (520, 201) une fois qu'un critère de transfert est satisfait, à l'au moins un terminal mobile (510), les informations relatives aux autres cellules (302) étant basées sur la position géographique (513) du terminal mobile (510),
**caractérisé en ce que**
la cellule de desserte détient des informations relatives à un traitement spécifique du terminal mobile indiquant qu'il convient d'appliquer, sur la base d'une altitude (407) du terminal mobile (510), un transfert libre en utilisant une nouvelle cellule de desserte située en contiguïté avec la cellule de desserte (520,201) ou un transfert désigné en utilisant une nouvelle cellule de desserte parmi une des autres cellules.

11. Cellule de desserte (520, 201) selon la revendication 10, comprenant :
une interface (532) avec le réseau cellulaire (540, 300) configurée pour :
transmettre les informations relatives à la position géographique (513) de l'au moins un terminal mobile (510) au réseau cellulaire (540, 300), et
recevoir les informations relatives aux autres cellules (302) depuis le réseau cellulaire (540, 300) .

12. Entité de réseau (530) d'un réseau cellulaire (540, 300), comprenant :
une interface (532) avec une cellule de desserte (520, 201), l'interface (532) étant configurée pour :
recevoir des informations depuis la cellule de desserte (520, 201) relatives à une position géographique (513) d'au moins un terminal mobile (510), en particulière un véhicule aérien sans pilote, UAV ; et
transmettre des informations à la cellule de desserte (520, 201) relatives à d'autres cellules (302) du réseau cellulaire (540, 300) qui sont autorisés à utiliser la connexion avec l'au moins un terminal mobile (510) depuis la cellule de desserte (520, 201) une fois qu'un critère de transfert st satisfait ; et
un contrôleur (531) configuré pour déterminer les informations relatives aux autres cellules (302) sur la base de la position géographique (513) de l'au moins un terminal mobile (510),
**caractérisée en ce que**
l'entité de réseau détient des informations relatives à un traitement spécifique du terminal mobile indiquant qu'il convient d'appliquer, sur la base d'une altitude (407) du terminal mobile (510), un transfert libre en utilisant une nouvelle cellule de desserte située en contiguïté avec la cellule de desserte (520,201) ou un transfert désigné en utilisant une nouvelle cellule de desserte parmi une des autres cellules.

13. Entité de réseau (530) selon la revendication 12,
dans laquelle le contrôleur (531) est configuré pour obtenir les informations relatives aux autres cellules (302) à partir d'une base de données, en particulier une table de consultation.

14. Entité de réseau (530) selon la revendication 11 ou 12,
dans lequel le contrôleur (531) est configuré pour déterminer les informations relatives aux autres cellules (302) sur la base d'une identité du terminal mobile (510), en particulier une identité d'abonné mobile international IMSI, mémorisée dans un serveur d'abonnement, en particulier un serveur d'abonnement de rattachement, HSS, du réseau cellulaire (540, 300).

15. Procéder (600) d'ordonnancement d'un transfert d'un terminal mobile (510), en particulier un véhiculé aérien sans pilote (UAV), le procédé comprenant :
la réception (601) d'informations relatives à une position géographique (513) du terminal mobile (510) par un récepteur de système de positionnement par satellites (GNSS) (511) ;
la transmission (602) de la position géographique (513) du terminal mobile (510) à une cellule de desserte (520, 201) d'un réseau cellulaire (540, 300) qui connecte le terminal mobile (510) au réseau cellulaire (540, 300) ; la réception (603) d'informations relatives à d'autres cellules (302) du réseau cellulaire (540, 300) qui sont autorisées à utiliser la connexion depuis la cellule de desserte (520, 201) une fois qu'un critère de transfert est satisfait, les autres cellules (302) dépendant de la position géographique (513) du terminal mobile (510), et
l'application, sur la base d'une altitude (407) du terminal mobile (510), d'un transfert libre en utilisant une nouvelle cellule de desserte située en contiguïté avec la cellule de desserte (520, 201) ou d'un transfert désigné en utilisant une nouvelle cellule de desserte parmi une des autres cellules.
